# EUROPÄISCHE PATENTSCHRIFT

(11) **EP 2 639 949 B1**
(45) Veröffentlichungstag und Bekanntmachung des Hinweises auf die Patenterteilung: **29.04.2020**
(21) Anmeldenummer: 12159232.3
(22) Anmeldetag: 13.03.2012
(51) Int. Cl.: H02M 1/36, H02H 9/00

(54) **Stromversorgung mit Zwischenkreis**
Electricity supply with intermediate circuit
Alimentation en courant avec circuit intermédiaire

(43) Veröffentlichungstag der Anmeldung: 18.09.2013
(73) Patentinhaber: Siemens Aktiengesellschaft, 80333 München (DE)
(72) Erfinder: Schweigert, Harald, 1120 Wien (AT)
(74) Vertreter: Maier, Daniel Oliver

(56) Entgegenhaltungen:
- EP-A1- 2 400 649
- DE-A1- 10 139 093
- US-A- 5 436 824

## Beschreibung

Die Erfindung betrifft eine Stromversorgung mit einem an eine Versorgungsspannung anschließbaren Zwischenkreis, der einen Zwischenkreiskondensator umfasst und dem ein getakteter Schaltwandler nachgeschaltet ist. Zudem betrifft die Erfindung ein Verfahren zum Betreiben der Stromversorgung.

Ein Zwischenkreis einer Stromversorgung wird meist aus einer gleichgerichteten ein- oder dreiphasigen Netzspannung gespeist. Er dient dabei zur Sicherstellung einer internen Betriebsspannung, die insbesondere bei einphasigen Netzen bewirkt, dass der nachgeschaltete Schaltwandler als eigentliche Leistungsstufe auch während eines Netznulldurchgangs mit Energie versorgt ist.

Erreicht wird eine ausreichende interne Betriebsspannung mittels zumindest eines Zwischenkreiskondensators. Ein solcher weist in der Regel 2µF pro Watt Ausgangsleistung der Stromversorgung auf. Die Zwischenkreiskapazität hat dabei noch zusätzliche Funktionen. Zum einen wird eine sehr kurze Netzunterbrechung überbrückbar, ohne dass eine Abschaltung der Stromversorgung erfolgen muss. Übliche Netzausfallsüberbrückungszeiten liegen zwischen 20ms und 40ms. Bei längeren Netzunterbrechungen ist dadurch immer noch ein geordnetes Abschalten von an die Stromversorgung angeschalteten Anlagenkomponenten möglich, wenn bei Ausbleiben der Netzspannung ein Signal gebildet wird, welches der angeschlossenen last den baldigen Spannungsverlust mitteilt.
Zum anderen hat die Zwischenkreiskapazität eine positive Wirkung bei der Reduzierung der Spannungswelligkeit, welche mit der Schaltfrequenz des Schaltwandlers auftritt. Für die Entstörung und Einhaltung vorgegebener leistungsgebundener Funkstörspannungen ist dies wesentlich, weil sonst ein Netzfilter der Stromversorgung größer dimensioniert werden müsste.

Die Vorteile eines Zwischenkreiskondensators sind mit dem Nachteil verbunden, dass beim Einschalten der Stromversorgung ein hoher Ladestrom auftritt. Konkret kommt es zu einem einmaligen Aufladestrom des Zwischenkreiskondensators beim Aufladen von Null Volt auf die gleichgerichtete Netzscheitelspannung. Obwohl dieser Aufladestrom aufgrund eines begrenzten Energieinhalts des Kondensators nur sehr kurz auftritt, ist er nicht vernachlässigbar, weil der erreichte Stromspitzenwert sehr hoch sein kann.

Abhängig davon, ob ein Anschalten an das Versorgungsnetz bei einer hohen oder niedrigen Netzmomentanspannung stattfindet, fließt ein hoher oder geringer Ladestrom in den Zwischenkreiskondensator. Ohne zusätzliche Maßnahmen ist dieser Ladestrom nur durch den Innenwiderstand des Zwischenkreiskondensators und die Anstiegsgeschwindigkeit der Netzspannung begrenzt. Der dabei erreichte Spitzenladestrom würde ohne geeignete Gegenmaßnahmen regelmäßig eingangsseitige Schaltungskomponenten zerstören.

Nach dem Stand der Technik ist deshalb vorgesehen, den Ladestrom des Zwischenkreiskondensators durch einen sogenannten Inrush Current Limiter zu begrenzen.

Eine einfache Lösung sieht die Anordnung eines NTC-Widerstands am Eingang der Stromversorgung vor. Beim Anschalten der Stromversorgung an das Versorgungsnetz weist ein solcher NTC-Widerstand bei Umgebungstemperatur einen relativ hohen Widerstandswert zur Begrenzung des Ladestromes auf. Der laufende Betrieb führt zu einer Erwärmung des NTC-Widerstands, wodurch der Widerstandswert und die entsprechende Verlustleistung sinken. Nachteilig ist eine solche Maßnahme im Falle eines kurzzeitigen Ausschaltens der Stromversorgung. Erfolgt ein Wiedereinschalten vor einer ausreichenden Abkühlung des NTC-Widerstands, steigt der Einschaltstrom möglicherweise über einen zulässigen Wert.

Aus der WO 98/28835 A ist eine Schaltung mit einem Zwischenkreiskondensator bekannt, welcher über einen wegschaltbaren Vorladewiderstand aufladbar ist. Dabei wird laufend die Erwärmung des Widerstands berechnet und ein nachgeschaltetes Gerät wird abgeschaltet, wenn eine nicht mehr zulässige Grenztemperatur erreicht wird.

In der Schrift US 4,719,553 A wird ein Ladestrom eines Zwischenkreiskondensators mittels eines Widerstands begrenzt, welcher nach einer Netzgleichrichterschaltung angeordnet ist. Dieser Widerstand wird gleichzeitig als Stromsensor genutzt. Sobald ein Spannungsabfall an dem Widerstand einen vorgegebenen Wert unterschreitet, erfolgt eine Überbrückung des Widerstands mittels eines Schalters.

Auch die US 5,124,630 A bezieht sich auf eine Vorladung eines Zwischenkreiskondensators über einen Widerstand und eine Überbrückung mittels eines Transistors. Nachteilig ist dabei, dass während eines Einschaltvorgangs nicht nur der Ladestrom des Zwischenkreiskondensators, sondern der gesamte von der Stromversorgung aufgenommene Strom über den Widerstand fließt. Dieser muss entsprechend dimensioniert sein.

Die EP 2 400 649 A1 offenbart eine Stromversorgungsschaltung, in der ein Zwischenkreiskondensator in Serie mit einem Schaltelement an die Zwischenkreisspannung angeschaltet ist, wobei das Schaltelement in Abhängigkeit des Ladestroms in den Zwischenkreiskondensator linear angesteuert wird.

Der Erfindung liegt die Aufgabe zugrunde, für eine Stromversorgung der eingangs genannten Art und ein entsprechendes Betriebsverfahren eine Verbesserung gegenüber dem Stand der Technik anzugeben.

Erfindungsgemäß wird diese Aufgabe gelöst durch eine Stromversorgung gemäß Anspruch 1 und ein Verfahren gemäß Anspruch 12.

Dabei ist der Zwischenkreiskondensator in Serie mit einem ersten Schaltelement an eine Zwischenkreisspannung angeschaltet und das erste Schaltelement ist in Abhängigkeit eines zum Ladestrom des Zwischenkreiskondensators proportionalen Stromes mittels einer Steuerung angesteuert. Das erste Schaltelement befindet sich direkt im Kondensatorzweig und wird nur mit dem Ladestrom des Zwischenkreiskondensators belastet. Die Ansteuerung des ersten Schaltelements erfolgt dabei in Abhängigkeit eines Stromes, der zum Ladestrom des Zwischenkreiskondensators proportional ist. Entweder wird der Strom im Kondensatorzweig oder ein dazu proportionaler Strom erfasst und daraus eine Steuerspannung für das erste Schaltelement generiert oder der proportionale Strom beeinflusst direkt eine Steuerspannung des ersten Schaltelements. Das erste Schaltelement ist dabei so dimensioniert, dass die zur Begrenzung des Ladestromes erforderliche Energieaufnahme möglich ist.

In einer Ausprägung ist dem Zwischenkreis eine Gleichrichterschaltung vorgeschaltet, zur Anschaltung an ein ein- oder mehrphasiges Versorgungsnetz.

Erfindungsgemäß ist parallel zu dem ersten Schaltelement ein Ladewiderstand angeordnet. Ein solcher Ladewiderstand begrenzt den Ladestrom so lange, bis das erste Schaltelement einschaltet. Die Dimensionierung des ersten Schaltelements ist auf diese Weise deutlich günstiger.

Zur einfachen Ansteuerung des ersten Schaltelements umfasst die Steuerung einen Hilfskondensator, an dem eine Steuerspannung zur Ansteuerung des ersten Schaltelements anliegt.

Es ist vorgesehen, dass der Hilfskondensator in Serie mit einer Widerstandsschaltung parallel zum ersten Schaltelement angeordnet ist. Die Widerstandsschaltung wird dann bei vollständigem Einschalten des ersten Schaltelements wirkungslos, wodurch Dauerverluste vermieden werden.

Dabei ist der Hilfskondensator über eine Hilfsschaltung an eine Hilfsspannung oder ein Hilfssignal des taktenden Schaltwandlers angeschlossen. Sobald das erste Schaltelement die Widerstandsschaltung überbrückt, wird auf diese Weise die Steuerspannung des ersten Schaltelements aufrecht erhalten.

Für die Ausbildung der Hilfsschaltung ist vorgesehen, dass diese aus einem Widerstand und einer parallel dazu angeordneten Diode besteht. Im Falle einer Versorgungsnetzabschaltung wird der Hilfskondensator über die Diode und den Widerstand rasch entladen, um das erste Schaltelement abzuschalten. Bei wiederkehrender Netzversorgung erfolgt dann erneut eine Ladestrombegrenzung mittels Ladewiderstand.

In einer vorteilhaften Weiterbildung ist parallel zum Hilfskondensator ein erstes Durchbruchelement, z.B. eine Zenerdiode, angeordnet. Dieses Durchbruchelement definiert die maximale Steuerspannung des ersten Schaltelements.

Eine vorteilhafte Weiterbildung sieht vor, dass in einem Parallelzweig zum ersten Schaltelement ein zweites Durchbruchelement angeordnet ist und dass mit diesem Parallelzweig ein zweites Schaltelement angesteuert ist, welches die Steuerspannung des ersten Schaltelements beeinflusst. Das zweite Durchbruchelement bestimmt dabei im Falle eines Stromstoßes eine maximal zulässige Spannungsspitze, für die das erste Schaltelement ausgelegt ist. Verursacht wird ein solcher Stromstoß durch einen Spannungsimpuls des Versorgungsnetzes. Sobald die Durchbruchspannung des zweiten Durchbruchelements erreicht ist, wird durch Aktivierung des zweiten Schaltelements die Steuerspannung des ersten Schaltelements unterbrochen. Das erste Schaltelement schaltet ab und der Ladestrom fließt über den Ladewiderstand. Die solcherart weitergebildete Schaltung verhindert wirkungsvoll eine Überlastung des ersten Schaltelements.

In einem einfachen Fall ist vorgesehen, dass das zweite Schaltelement den Steueranschluss des ersten Schaltelements an ein Bezugspotenzial schaltet. Sobald das zweite Schaltelement infolge eines Spannungsdurchbruchs des zweiten Durchbruchelements einschaltet, wird die Steuerspannung auf das Bezugspotenzial gezogen und das erste Schaltelement schaltet ab.

Ein erfindungsgemäßes Verfahren sieht vor, dass mittels Steuerung das erste Schaltelement in Abhängigkeit des Ladestromes des Zwischenkreiskondensators angesteuert wird, um diesen Ladestrom zu begrenzen.

Dabei ist es vorteilhaft, wenn dem getakteten Schaltwandler ein Sperrsignal zugeführt wird und wenn das Sperrsignal so lange ein Hochlaufen des Schaltwandlers blockiert, bis das erste Schaltelement eingeschaltet wird. Auf diese Weise ist sichergestellt, dass das erste Schaltelement beim Einschalten keinen Überstrom erfährt. Ohne eine solche Blockierung führt ein Startvorgang zu einer Belastung des Zwischenkreiskondensators, welche nicht durch den Vorladewiderstand ausgeglichen werden kann. Die Spannung am Zwischenkreiskondensator sinkt wieder, ohne dass das erste Schaltelement einschaltet. Schaltet das erste Schaltelement dann doch ein (z.B. aufgrund einer Zeitsteuerung oder aufgrund eines anderen Befehls - etwa durch eine Hilfsversorgung des Wandlers), fließt ein sehr großer Nachladestrom durch das Schaltelement.

Des Weiteren ist es von Vorteil, wenn ein Hilfskondenstor über eine Widerstandsschaltung geladen wird und wenn das erste Schaltelement mit eine am Hilfskondensator anliegenden Steuerspannung angesteuert wird. Damit ist ein einfaches Verfahren zur Ansteuerung des ersten Schaltelements angegeben.

Ein anderes vorteilhaftes Verfahren sieht vor, dass der Ladestrom des Zwischenkreiskondensators mittels eines Shuntwiderstands und eines zweiten Schaltelements erfasst wird und dass das zweite Schaltelement die Steuerspannung des ersten Schaltelements in der Weise beeinflusst, dass der Ladestrom des Zwischenkreiskondensators begrenzt wird. Mittels Shuntwiderstand ist eine Stromgrenze festgelegt. Wird diese überschritten, schaltet das zweite Schaltelement ein und die Steuerspannung des ersten Schaltelements sinkt. Infolgedessen steigt die Spannung am ersten Schaltelement und der Ladestrom wird begrenzt. Die Steuerspannung wird dabei wiederum mittels eines Hilfskondensators bereitgestellt.

Zur Vermeidung einer Überlastung des ersten Schaltelements bei Stromspitzen ist es günstig, wenn einer am ersten Schaltelement anliegende Spannung ein oberer Grenzwert vorgegeben wird und dass bei Errechung des oberen Grenzwerts das erste Schaltelement völlig gesperrt wird.

Die Erfindung wird nachfolgend in beispielhafter Weise unter Bezugnahme auf die beigefügten Figuren erläutert. Es zeigen in schematischer Darstellung:
- Fig. 1: Schaltungsanordnung ohne Ladewiderstand
- Fig. 2: Schaltungsanordnung mit Ladewiderstand und einfacher Ansteuerung des ersten Schaltelements in einem ersten Beispiel außerhalb der Erfindung.
- Fig. 3: Schaltungsanordnung mit einfacher Ansteuerung des ersten Schaltelements und verlustarmen Dauerbetrieb
- Fig. 4: Schaltungsanordnung mit modifizierter Ansteuerung des ersten Schaltelements in einem zweiten Beispiel außerhalb der Erfindung.
- Fig. 5: Schaltungsanordnung mit modifizierter Ansteuerung des ersten Schaltelements und verlustarmen Dauerbetrieb

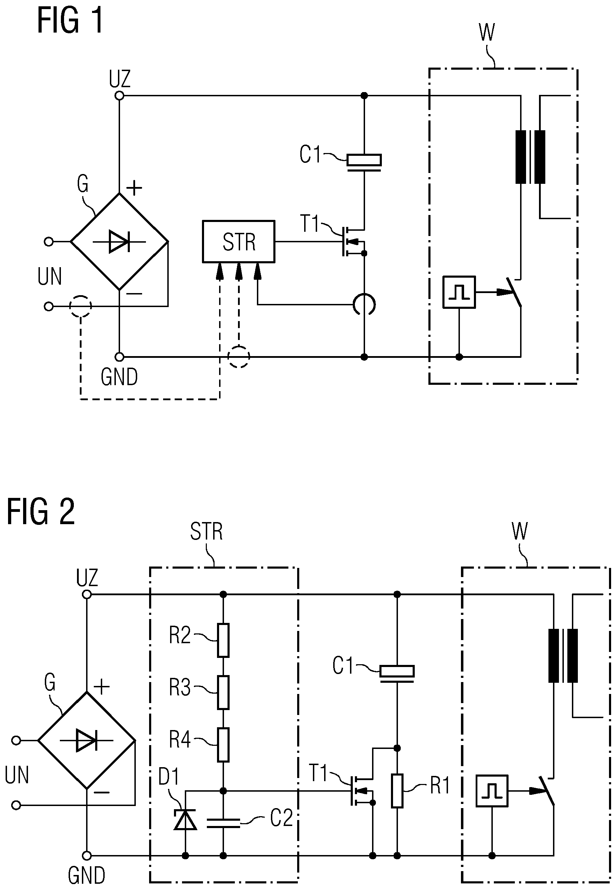

Fig. 1 zeigt eine einfache erfindungsgemäße Stromversorgung. Ein Zwischenkreis ist über eine Gleichrichterschaltung G an eine Netzspannung UN angeschaltet. Der Zwischenkreis umfasst einen Zwischenkreiskondensator C1, an dem eine Zwischenkreisspannung UZ gegenüber einem Bezugspotenzial GND anliegt.

Dem Zwischenkreis nachgeschaltet ist ein taktender Schaltwandler W mit einem Schaltelement, welches eine Primärwicklung eines Transformators taktend an die Zwischenkreisspannung UZ schaltet.

Wird die Stromversorgung an die Netzspannung UN angeschlossen, lädt sich der Zwischenkreiskondensator C1 mit einem Ladestrom auf. Dieser Ladestrom wird mittels eines ersten Schaltelements T1 beschränkt. Zu diesem Zweck ist das erste Schaltelement T1 in Serie zum Zwischenkreiskondensator C1 an die Zwischenkreisspannung UZ angeschlossen. Als erstes Schaltelement T1 kommt beispielsweise ein normal sperrender MOSFET zum Einsatz.

Angesteuert wird das erste Schaltelement T1 mittels einer Steuerung STR. Dieser ist ein zum Ladestrom des Zwischenkreiskondensators C1 proportionaler Strommesswert zugeführt. Die Strommessung ermöglicht einen Rückschluss auf den Kondensatorstrom. Dabei kommen beispielsweise folgende Messvarianten in Frage:
- Strommessung im Wechselstromkreis
- Strommessung im Ausgang der Gleichrichterschaltung G
- Strommessung direkt in der Kondensatorleitung
- Auswertung der Spannung einer Hilfswicklung des Schaltwandlers W
- Hilfs-RC-Glied mit kleinerer Dimensionierung und Detektierung des Spannungshubs am Zwischenkreis
- Spannungsmessung am Ausgang der Gleichrichterschaltung G
- Spannungsmessung an der Wechselspannungsseite

Die Variante zur Messung des Kondensatorstromes ist in Fig. 1 mit durchgezogenen Linien eingezeichnet. Zwei Alternativen sind gestrichelt dargestellt.

Abhängig vom erfassten Messwert wird das erste Schaltelement T1 in der Weise angesteuert, dass der Ladestrom des Zwischenkreiskondensators unterhalb eines oberen Grenzwerts bleibt. Das proportionale Verhältnis zwischen dem Ladestrom und dem Messwert wird in der Steuerung berücksichtigt. In einer ersten Ladephase, in der der Ladestrom ohne die vorliegende Maßnahme am größten wäre, ist das erste Schaltelement T1 nur schwach leitend. Es nimmt die überschüssige Energie auf und ist dafür entsprechend dimensioniert. Mit Fortdauer des Ladevorgangs sinkt die am linear angesteuerten ersten Schaltelement T1 abfallende Spannung, bis der Zwischenkreiskondensator C1 vollständig aufgeladen ist. Dann ist auch das erste Schaltelement T1 vollständig geöffnet. Geeignet ist eine solche Ausführung insbesondere für Geräte mit geringen Ausgangsleistungen. Es kommen dabei handelsübliche Leistungstransistoren mit ausreichender Energieaufnahmekapazität zum Einsatz.

Konkret führt die Strombegrenzung im ersten Schaltelement T1 oder in parallel dazu angeordneten Elementen dazu, dass mittels dieser Elemente Energie in Wärme umgesetzt wird, wobei diese Energie dem Energiegehalt des geladenen Zwischenkreiskondensators C1 entspricht.

In industriellen Anwendungen kommt es immer wieder zu Netzspannungsspitzen, die einen Überstrom in den Eingangskreis der Stromversorgung bewirken können. Deshalb wird der Strommesswert auch im Normalbetrieb mittels Steuerung ausgewertet, um im Zwischenkreiskondensator C1 Stromstöße durch Abschalten des ersten Schaltelements T1 zu verhindern. Auch der nachgeschaltete Schaltwandler W wird durch eine entsprechende Überspannungsüberwachung geschützt.

Fig. 2 zeigt eine Stromversorgung für höhere Leistungen als Beispiel außerhalb der Erfindung. Dabei ist parallel zum ersten Schaltelement T1 ein Ladewiderstand R1 angeordnet. In diesem Fall wird das erste Schaltelement T1 genutzt, um den Ladewiderstand R1 bei fallendem Ladestrom zu überbrücken. Dazu ist eine Steuerung STR vorgesehen, welche einen Hilfskondensator C2 umfasst. Dieser Hilfskondensator C2 ist mit einem ersten Anschluss an den Steueranschluss des ersten Schaltelements T1 und mit einem zweiten Anschluss an das Bezugspotenzial GND angeschlossen. Zudem ist der erste Anschluss des Hilfskondensators C2 über eine Widerstandsschaltung R2, R3, R4 an die Zwischenkreisspannung UZ angeschaltet. Die Widerstandsschaltung R2, R3, R4 umfasst günstigerweise mehrere in Serie geschaltete Widerstände R2, R3, R4, sodass bei baugleichen Widerständen der Widerstandswert jenen des Ladewiderstands R1 übersteigt. Mehrere Widerstände bewirken dabei eine höhere Spannungsfestigkeit.

Als Ladewiderstand R1 ist vorzugsweise ein PTC-Widerstand vorgesehen.

Ein Anschließen der Stromversorgung an die Netzspannung UN führt zu einem Aufladen des Zwischenkreiskondensators C1 und zu einem Aufladen des Hilfskondensators C2. Die beiden Ladeströme sind dabei zueinander proportional, wobei der Ladestrom des Hilfskondensators C2 infolge der größeren Widerstandswerte geringer ist. Dadurch erreicht die Spannung am Hilfskondensator C2 erst dann eine Schwellenspannung des ersten Schaltelements T1, wenn der Zwischenkreiskondensator C1 bereits weitgehend aufgeladen ist. In dieser Phase nimmt der Ladewiderstand R1 bereits wenig Energie auf und der restliche Ladestrom wird vom sich öffnenden ersten Schaltelement T1 übernommen.

Somit weist das erste Schaltelement T1 wiederum eine Ansteuerung auf, welche von einem zum Ladestrom des Zwischenkreiskondensators proportionalen Strom abhängig ist, nämlich von dem Strom, welcher den Hilfskondensator auflädt. Die Dimensionierung der Widerstandschaltung R2, R3, R4 und des Hilfskondensators C2 sowie der Schwellenspannung des ersten Schaltelements T1 ist dabei auf die Zwischenkreisspannung UZ, die Kapazität des Zwischenkreiskondensators C1 und den Widerstandswert des Ladewiderstands R1 abgestimmt.

Zur Begrenzung der Spannung am Hilfskondensator C2 ist ein erstes Durchbruchelement D1 angeordnet, welches beispielsweise als Zenerdiode ausgebildet ist.

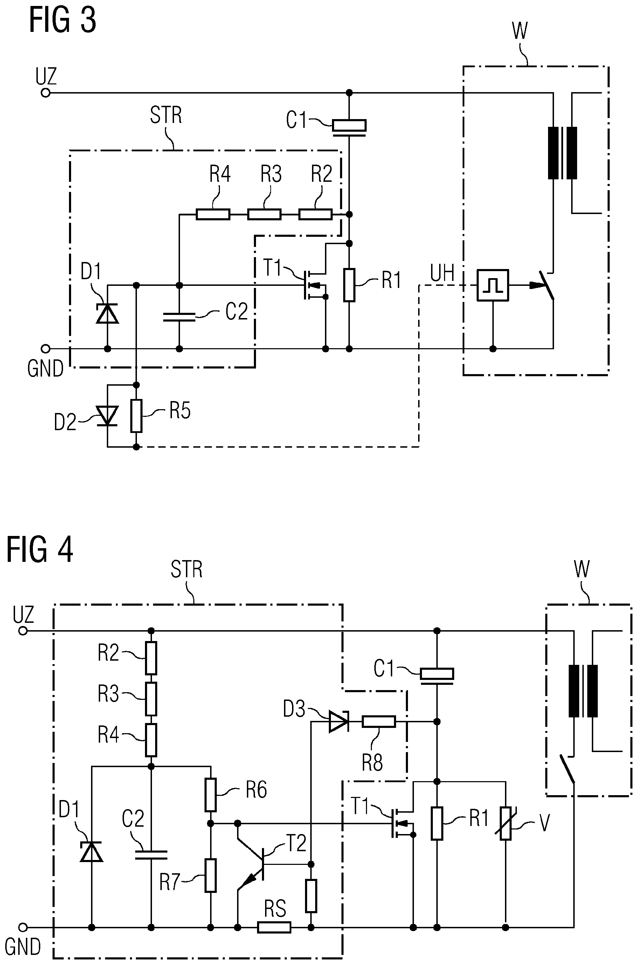

Um im Dauerbetrieb Energieverluste zu vermeiden ist es erfindungsgemäß vorgesehen, dass der erste Anschluss des Hilfskondensators C2 über die Widerstandsschaltung R2, R3, R4 an einen Verbindungspunkt zwischen erstem Schaltelement T1 und Zwischenkreiskondensator C1 geschaltet ist (Fig. 3). Der Ladestrom des Zwischenkreiskondensators C1 teilt sich dabei in einer ersten Ladephase in einen Strom durch den Ladewiderstand R1 und einen Strom zum Aufladen des Hilfskondensators C2 auf. Sobald die Spannung am Hilfskondensator C2 die Schwellenspannung des ersten Schaltelements T1 erreicht, schließt das erste Schaltelement T1 und überbrückt schließlich sowohl den Ladewiderstand R1 als auch die Widerstandsschaltung R2, R3, R4 zum Aufladen des Hilfskondensators C2. Die Steuerspannung am Hilfskondensator C2 wird ab diesem Zeitpunkt über eine Hilfsspannung UH des Schaltwandlers W aufrecht erhalten. Zu diesem Zweck ist ein Hilfsspannungsanschluss des Schaltwandlers W über eine Hilfsschaltung mit dem ersten Anschluss des Hilfskondensators C2 verbunden. Die Hilfsschaltung umfasst dabei einen Widersand R5 und eine parallel dazu angeordnete Diode D2.

Bei einem Netzausfall wird der Hilfskondensator C2 sofort über die Hilfsschaltung entladen. Damit ist sichergestellt, dass das erste Schaltelement T1 abschaltet und ein neuerliches Laden des Zwischenkreiskondensators C1 über den Ladewiderstand R1 erfolgt.

Eine Weiterentwicklung der Ansteuerung des ersten Schaltelements als zweites Beispiel außerhalb der Erfindung ist in Fig. 4 dargestellt. Der Hilfskondensator C2 ist dabei wie in Fig. 2 über eine Widerstandsschaltung R2, R3, R4 an die Zwischenkreisspannung UZ angeschlossen. Die am Hilfskondensator C2 anliegende Spannung ist über einen Spannungsteiler R6, R7 dem Steueranschluss des ersten Schaltelements T1 zugeführt. Zudem ist der Steueranschluss des ersten Schaltelements T1 über ein zweites Schaltelement T2 mit dem Bezugspotenzial GND verbunden.

Ein Steueranschluss des zweiten Schaltelements T2 ist über einen Anpassungswiderstand mit der Parallelschaltung des ersten Schaltelements T1 und des Ladewiderstands R1 in Serie geschaltet und über einen Shuntwiderstand RS mit dem Bezugspotenzial GND verbunden.

Der Strom durch den Shuntwiderstand RS verursacht einen stromproportionalen Spannungsabfall und steuert das zweite Schaltelement T2, das wiederum die am Steueranschluss des ersten Schaltelements T1 anliegende Steuerspannung beeinflusst. Auch hier sind die mit Bezug auf Fig. 1 beschriebenen alternativen Strommessmethoden anwendbar. Dabei wird zunächst der Zwischenkreiskondensator C1 auf eine definierte Differenzspannung zwischen der Kondensatorspannung und der Zwischenkreisspannung UZ aufgeladen, während das erste Schaltelement T1 durch ein Absenken seiner Steuerspannung auf nahezu Null gesperrt bleibt. Diese Differenzspannung liegt am ersten Schaltelement T1 an. Über die Steuerschaltung STR wird das erste Schaltelement T1 freigegeben und lädt im Linearmodus den Zwischenkreiskondensator C1 weiter auf. Je weniger das zweite Schaltelement T2 infolge eines geringeren Stromes durch den Shuntwiderstand RS öffnet, desto höher wird die Steuerspannung des ersten Schaltelements T1. Das erste Schaltelement T1 öffnet sich zunehmend und ist schließlich völlig geöffnet, sobald der Ladestrom unter den eingestellten Strombegrenzungswert abfällt.

Zudem ist ein Verbindungspunkt zwischen erstem Schaltelement T1 und Zwischenkreiskondensator C1 über ein zweites Durchbruchelement D3 mit dem Steueranschluss des zweiten Schaltelements T2 verbunden. Wenn infolge einer Netzspannungsspitze die Durchbruchspannung des Durchbruchselements D3 erreicht wird, öffnet das zweite Schaltelement T2 sofort und die Steuerspannung am ersten Schaltelement T1 fällt ab. Das erste Schaltelement T1 sperrt vollständig, bis die Überspannung unter eine für das erste Schaltelement T1 zulässige Spannung abfällt. Erst danach kann ein Strombegrenzungsbetrieb durch Auswertung des Spannungsabfalls am Shuntwiderstand RS erfolgen. Auch beim Einschalten der Stromversorgung wirkt diese Schaltung bereits. Konkret wird im Normalbetrieb wird, dass das erste Schaltelement T1 bei einer zu hohen Differenzspannung einschalten und somit bei einer zu hohen Spannung in den Linearmodus übergeht.

Parallel zum ersten Schaltelement T1 ist zusätzlich ein Spannungsableiter V, z.B. ein Varistor, angeordnet. Dieser begrenzt die am ersten Schaltelement T1 auftretende Spannung.

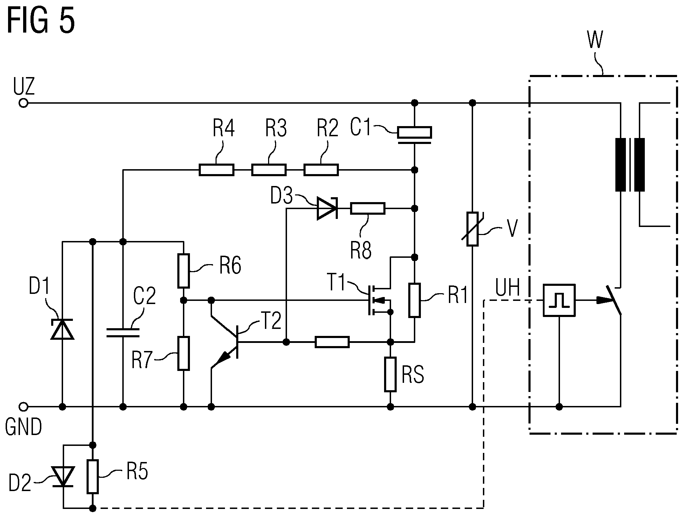

In Fig. 5 ist die Widerstandsschaltung R2, R3, R4 zum Aufladen des Hilfskondensators C2 wie in Fig. 3 an einen Verbindungspunkt zwischen erstem Schaltelement T1 und Zwischenkreiskondensator C1 geschaltet um Verluste im Dauerbetrieb zu vermeiden.

Ein Spannungsableiter V ist hierbei unmittelbar vor dem Schaltwandler W im Zwischenkreis angeordnet. Infolge eines Überspannungsimpulses wird bei Erreichung der Durchbruchspannung des zweiten Durchbruchelements D3 das erste Schaltelement T1 abgeschaltet und der Ladestrom durch den parallelen Ladewiderstand R1 begrenzt. Der Schaltwandler umfasst eine eigene Überspannungsüberwachung. Übersteigt die mittels Spannungsableiter V begrenzte Zwischenkreisspannung UZ einen kritischen Wert, schaltet auch der Schaltwandler W ab.

Sinnvollerweise wird der Anlauf des Schaltwandlers W verzögert, bis der Zwischenkreiskondensator C1 vollständig aufgeladen ist. Dies geschieht entweder durch eine ausreichende Verzögerung einer Hilfsversorgung des Schaltwandlers W oder durch ein aktives Sperrsignal, welches von einer am ersten Schaltelement T1 anliegenden Restspannung abgeleitet ist.

Die dargestellten Ausführungen sind nur beispielhaft. Einzelne Ausführungsdetails sind in sinnvoller Weise auch anders als dargestellt kombinierbar, um eine erfindungsgemäße Lösung zu realisieren. Zudem sind die vorgestellten Ausführungen mit zusätzlichen Strom begrenzenden Elementen kombinierbar. Beispielsweise kann im Zwischenkreis ein zusätzlicher ohmscher Widerstand bzw. NTC-Widerstand vorgesehen sein. Dieser ist jedoch gegenüber bekannten Lösungen aufgrund der erfindungsgemäßen Maßnahmen deutlich kleiner, wodurch insgesamt ein besserer Wirkungsgrad erreicht wird. Ein solcher Widerstand fängt einerseits Spannungsimpulse ab und reduziert andererseits Oberwellen des aufgenommenen Netzstromes.

## Patentansprüche

1. Stromversorgung mit einem an eine Versorgungsspannung (UN) anschließbaren Zwischenkreis, der einen Zwischenkreiskondensator (C1) umfasst und dem ein getakteter Schaltwandler (W) nachgeschaltet ist, wobei der Zwischenkreiskondensator (C1) in Serie mit einem ersten Schaltelement (T1) an eine Zwischenkreisspannung (UZ) angeschaltet ist, und das erste Schaltelement (T1) in Abhängigkeit eines zum Ladestrom des Zwischenkreiskondensators (C1) proportionalen Stromes mittels einer Steuerung (STR) linear angesteuert ist,
**dadurch gekennzeichnet dass** parallel zu dem ersten Schaltelement (T1) ein Ladewiderstand (R1) angeordnet ist, dass die Steuerung (STR) einen Hilfskondensator (C2) umfasst, an dem eine Steuerspannung zur Ansteuerung des ersten Schaltelements (T1) anliegt, dass der Hilfskondensator (C2) in Serie mit einer Widerstandsschaltung (R1, R2, R3) parallel zum ersten Schaltelement (T1) angeordnet ist, dass der Hilfskondensator (C2) über eine Hilfsschaltung an eine Hilfsspannung (UH) oder ein Hilfssignal des taktenden Schaltwandlers (W) angeschlossen ist, und dass die Hilfsschaltung aus einem Widerstand (R5) und einer parallel dazu angeordneten Diode (D2) gebildet ist.

2. Stromversorgung nach Anspruch 1, **dadurch gekennzeichnet, dass** dem Zwischenkreis eine Gleichrichterschaltung (G) vorgeschaltet ist.

3. Stromversorgung nach einem der Ansprüche 1 bis 2, **dadurch gekennzeichnet, dass** parallel zu dem Hilfskondensator (C2) ein erstes Durchbruchelement (D1) angeordnet ist.

4. Stromversorgung nach einem der Ansprüche 1 bis 3, **dadurch gekennzeichnet, dass** in einem Parallelzweig zum ersten Schaltelement (T1) ein zweites Durchbruchelement (D3) angeordnet ist und dass mit diesem Parallelzweig ein zweites Schaltelement (T2) angesteuert ist, welches die Steuerspannung des ersten Schaltelements (T1) beeinflusst.

5. Stromversorgung nach Anspruch 4, **dadurch gekennzeichnet, dass** das zweite Schaltelement (T2) den Steueranschluss des ersten Schaltelements (T1) an ein Bezugspotenzial (GND) schaltet.

6. Verfahren zur Ansteuerung einer Stromversorgung nach einem der Ansprüche 1 bis 5, **dadurch gekennzeichnet, dass** mittels Steuerung (STR) das erste Schaltelement (T1) in Abhängigkeit des Ladestromes des Zwischenkreiskondensators (C1) linear angesteuert wird, um diesen Ladestrom zu begrenzen.

7. Verfahren nach Anspruch 6, **dadurch gekennzeichnet, dass** dem getakteten Schaltwandler (W) ein Sperrsignal zugeführt wird und dass das Sperrsignal so lange ein Hochlaufen des Schaltwandlers (W) blockiert, bis das erste Schaltelement (T1) eingeschaltet wird.

8. Verfahren nach Anspruch 6 oder 7, **dadurch gekennzeichnet, dass** ein Hilfskondensator (C2) über eine Widerstandsschaltung (R2, R3, R4) geladen wird und dass das erste Schaltelement (T1) mit einer am Hilfskondensator (C2) anliegenden Steuerspannung angesteuert wird.

9. Verfahren nach einem der Ansprüche 6 bis 8, **dadurch gekennzeichnet, dass** der Ladestrom des Zwischenkreiskondensators (C1) mittels eines Shuntwiderstands (RS) und eines zweiten Schaltelements (T2) erfasst wird und dass das zweite Schaltelement (T2) die Steuerspannung des ersten Schaltelements (T1) in der Weise beeinflusst, dass der Ladestrom des Zwischenkreiskondensators (C1) begrenzt wird.

10. Verfahren nach einem der Ansprüche 6 bis 9, **dadurch gekennzeichnet, dass** einer am ersten Schaltelement (T1) anliegende Spannung ein oberer Grenzwert vorgegeben wird und dass bei Erreichung des oberen Grenzwerts das erste Schaltelement (T1) völlig gesperrt wird.

11. Verfahren nach einem der Ansprüche 6 bis 10, **dadurch gekennzeichnet, dass** der Strommesswert auch im Normalbetrieb laufend mittels Steuerung ausgewertet wird, um im Zwischenkreiskondensator (C1) Stromstöße durch Abschalten der ersten Schaltelements (T1) zu verhindern.

## Claims

1. Electricity supply with an intermediate circuit which can be connected to a supply voltage (UN) and which intermediate circuit comprises an intermediate circuit capacitor (C1) and downstream of which a clocked switching converter (W) is arranged, wherein the intermediate circuit capacitor (C1) is connected in series with a first switching element (T1) to an intermediate circuit voltage (UZ) and the first switching element (T1) is controlled linearly by means of a controller (STR) as a function of a current proportional to the charging current of the intermediate circuit capacitor (C1), **characterised in that** a charging resistor (R1) is arranged parallel to the first switching element (T1), that the controller (STR) comprises an auxiliary capacitor (C2) to which a control voltage for controlling the first switching element (T1) is applied, that the auxiliary capacitor (C2) in series with a resistance circuit (R1, R2, R3) is arranged parallel to the first switching element (T1), that the auxiliary capacitor (C2) is connected via an auxiliary circuit to an auxiliary voltage (UH) or an auxiliary signal of the clocked switching converter (W) and that the auxiliary circuit is formed from a resistor (R5) and a diode (D2) arranged parallel thereto.

2. Electricity supply according to claim 1, **characterised in that** a rectifier circuit (G) is arranged upstream of the intermediate circuit.

3. Electricity supply according to one of claims 1 to 2, **characterised in that** a first breakthrough element (D1) is arranged parallel to the auxiliary capacitor (C2).

4. Electricity supply according to one of claims 1 to 3, **characterised in that** a second breakthrough element (D3) is arranged in a parallel branch to the first switching element (T1) and that with this parallel branch a second switching element (T2) is controlled which influences the control voltage of the first switching element (T1).

5. Electricity supply according to claim 4, **characterised in that** the second switching element (T2) connects the control terminal of the first switching element (T1) to a ground potential (GND).

6. Method for controlling an electricity supply according to one of claims 1 to 5, **characterised in that** the controller (STR) is used to linearly control the first switching element (T1) as a function of the charging current of the intermediate circuit capacitor (C1) in order to limit this charging current.

7. Method according to claim 6, **characterised in that** a blocking signal is fed to the clocked switching converter (W) and that the blocking signal blocks a start-up of the switching converter (W) until the first switching element (T1) is switched on.

8. Method according to claim 6 or 7, **characterised in that** an auxiliary capacitor (C2) is charged by way of a resistance circuit (R2, R3, R4) and that the first switching element (T1) is controlled with a control voltage applied to the auxiliary capacitor (C2).

9. Method according to one of claims 6 to 8, **characterised in that** the charging current of the intermediate circuit capacitor (C1) is detected by means of a shunt resistor (RS) and a second switching element (T2) and that the second switching element (T2) influences the control voltage of the first switching element (T1) in such a manner that the charging current of the intermediate circuit capacitor (C1) is limited.

10. Method according to one of claims 6 to 9, **characterised in that** an upper limit value is predetermined for a voltage applied to the first switching element (T1) and that when the upper limit value is reached the first switching element (T1) is blocked completely.

11. Method according to one of claims 6 to 10, **characterised in that** the measured current value is also evaluated continuously during normal operation by means of a controller in order to prevent current pulses in the intermediate circuit capacitor (C1) as a result of switching off the first switching element (T1).

## Revendications

1. Alimentation électrique avec un circuit intermédiaire pouvant être raccordé à une tension d'alimentation (UN), qui comprend un condensateur de circuit intermédiaire (C1) et en aval duquel est branché un convertisseur à commutation (W), le condensateur de circuit intermédiaire (C1) étant branché en série avec un premier élément de commutation (T1) à une tension de circuit intermédiaire (UZ) et le premier élément de commutation (T1) étant contrôlé de manière linéaire en fonction d'un courant proportionnel au courant de charge du condensateur de circuit intermédiaire (C1) au moyen d'une commande (STR), **caractérisée en ce que**, parallèlement au premier élément de commutation (T1), est disposée une résistance de charge (R1), **en ce que** la commande (STR) comprend un condensateur auxiliaire (C2) auquel est appliqué une tension de commande pour le contrôle du premier élément de commutation (T1), le condensateur auxiliaire (C2) est branché en série avec un circuit à résistance (R1, R2, R3) parallèlement au premier élément de commutation (T1), le condensateur auxiliaire (C2) est connecté, par l'intermédiaire d'un circuit auxiliaire, à une tension auxiliaire (UH) ou à un signal auxiliaire du convertisseur à commutation (W) donnant le cadencement et le circuit auxiliaire est constitué d'une résistance (R5) et d'une diode (D2) branchée en parallèle à celle-ci.

2. Alimentation électrique selon la revendication 1, **caractérisée en ce que**, en amont du circuit intermédiaire, est branché un circuit redresseur (G).

3. Alimentation électrique selon l'une des revendications 1 à 2, **caractérisée en ce que**, parallèlement au condensateur auxiliaire (C2), est branché un premier élément de claquage (D1) .

4. Alimentation électrique selon l'une des revendications 1 à 3, **caractérisée en ce que**, dans une branche parallèle au premier élément de commutation (T1), est disposé un deuxième élément de claquage (D3) et **en ce que** cette branche parallèle permet de contrôler un deuxième élément de commutation (T2), qui influe sur la tension de commande du premier élément de commutation (T1).

5. Alimentation électrique selon la revendication 4, **caractérisée en ce que** le deuxième élément de commutation (T2) connecte le raccordement de commande du premier élément de commutation (T1) à un potentiel de référence (GND).

6. Procédé de contrôle d'une alimentation électrique selon l'une des revendications 1 à 5, **caractérisé en ce que**, au moyen d'une commande (STR), le premier élément de commutation (T1) est contrôlé linéairement en fonction du courant de charge du condensateur de circuit intermédiaire (C1), afin de limiter ce courant de charge.

7. Procédé selon la revendication 6, **caractérisé en ce que**, dans le convertisseur à commutation (W) de cadencement, est introduit un signal de blocage et **en ce que** le signal de blocage bloque un démarrage du convertisseur à commutation (W) jusqu'à ce que le premier élément de commutation (T1) soit activé.

8. Procédé selon la revendication 6 ou 7, **caractérisé en ce qu'**un condensateur auxiliaire (C2) est chargé par l'intermédiaire d'un circuit à résistance (R2, R3, R4) et **en ce que** le premier élément de commutation (T1) est contrôlé avec une tension de commande appliquée au condensateur auxiliaire (C2).

9. Procédé selon l'une des revendications 6 à 8, **caractérisé en ce que** le courant de charge du condensateur de circuit intermédiaire (C1) est mesuré au moyen d'une résistance de shunt (RS) et d'un deuxième élément de commutation (T2) et **en ce que** le deuxième élément de commutation (T2) influe sur la tension de commande du premier élément de commutation (T1) de façon à ce que le courant de charge du condensateur de circuit intermédiaire (C1) soit limité.

10. Procédé selon l'une des revendications 6 à 9, **caractérisé en ce que**, pour la tension appliquée au premier élément de commutation (T1), est prédéterminée une valeur limite supérieure et **en ce que**, lorsque la valeur limite supérieure est atteinte, le premier élément de commutation (T1) est entièrement bloqué.

11. Procédé selon l'une des revendications 6 à 10, **caractérisé en ce que** la valeur de mesure du courant est analysée en permanence, même en fonctionnement normal, au moyen de la commande, afin d'empêcher des surtensions dans le condensateur de circuit intermédiaire (C1), par la désactivation du premier élément de commutation (T1).
